Europäisches Patentamt

(19) European Patent Office

Office européen des brevets

(11) Publication number: **0 212 276**
**B1**

# EUROPEAN PATENT SPECIFICATION

(12)

(45) Date of publication of the patent specification:
**13.06.90**

(21) Application number: **86109887.9**

(22) Date of filing: **18.07.86**

(51) Int. Cl.⁵: **F16H 3/72**

(54) **Multi-speed accessory drive.**

(30) Priority: **30.08.85 US 771381**
**30.08.85 US 771445**

(43) Date of publication of application:
**04.03.87 Bulletin 87/10**

(45) Publication of the grant of the patent:
**13.06.90 Bulletin 90/24**

(84) Designated Contracting States:
**DE FR GB IT SE**

(56) References cited:
**EP-A- 0 135 790**
**EP-A- 0 190 415**
**AT-B- 73 338**
**AT-B- 155 429**
**DE-C- 102 766**
**FR-A- 809 454**
**FR-A- 1 185 525**
**FR-A- 2 484 927**
**US-A- 1 207 767**
**US-A- 3 109 325**
**US-A- 3 382 736**

(73) Proprietor: **Siemens Aktiengesellschaft,**
**Wittelsbacherplatz 2, D-8000 München 2(DE)**

(72) Inventor: **Anderson, Andrew Gordon, c/o Allied**
**Corporation P. O. Box 5060, Southfield**
**Michigan 48086(US)**
Inventor: **Gleason, John William, c/o Allied Corporation**
**P. O. Box 5060, Southfield Michigan 48086(US)**

ACTORUM AG

## Description

### BACKGROUND AND SUMMARY OF THE INVENTION

The invention is related to a multispeed accessory drive and more specifically to engine driven apparatus for driving at least one vehicle mounted accessory at either one of two selectable speeds as well as being able to totally disengage (zero speed) the accessory.

Planetary gear sets are often used in drive units for speed changing applications by selectively restraining one of either the ring gear, the sun gear or the planet gear carrier. One such drive unit is illustrated in a previously published European Patent Specification EP-A 0 135 790. In the context of an accessory drive unit for automotive applications the planet gear set may be employed as a means for over-driving the accessory at a speed that is higher than the speed of the engine (crankshaft). However, overdriving the accessory, that is, to drive it faster than the speed of the engine reduces the useful life of the gear unit and often generates an unacceptable level of accoustic whine. Further, such prior drive units have used planetary gear sets to drive the accessory at only either of two speeds. The first speed being equal to input speed and the second speed differing from the first by the effective gear ratio of the gear set. It is desirable and often a necessity with smaller displacement engines to be able to disengage the accessories when starting the vehicle. This feature is especially important during cold start to lessen the drag on the engine.

A more recent proposal for a multispeed accessory drive is described in the Specification of European Patent Specification EP-A 0 190 415 (published 13.8.86) wherein an input member is coupled for rotation with a pressure plate of a clutch arrangement which when engaged provides direct drive between the input member and an output member. In contrast to the above mentioned prior proposal not only is zero speed attainable but a sun and planet gear is also incorporated which operates in a manner whereby the output member is driven from the planet gear when surrounding ring gear is held stationary by a brake. A speed reduction in relation to the input member is thereby selectively obtainable.

The present invention seeks to provide a further improvement on a multispeed drive of the general type described above.

According to the present invention there is provided a multi-speed accessory drive having a plurality of operating conditions in which an output member is rotated at the speed of an input or driving member, at a reduced speed ratio or at zero speed relative thereto the drive comprising a planetary gear set comprising sun gear, a plurality of planet gears meshing with said sun gear and a ring gear, said sun gear being drivingly connected to the input member and said planet gears being drivingly connectable to the output member and means for selectively freeing or restraining said ring gear to permit said output member respectively to be free to be driven by the input member a pressure plate axially movable relative to the input member means for selectively moving said pressure plate into or out of rotational engagement with a clutching surface connected to said output member for alternatively drivingly connecting or disconnecting said output member with said input member; and characterized by an axially resilient spring link rotatably keyed to and acting between said input member and said pressure plate for rotating said pressure plate and for axially urging said pressure plate away from said driving link.

In order that the invention may be more clearly understood the same will now be described by way of example with reference to the accompanying drawings of which

FIGURE 1 is a partial cross-sectional view of a multi-speed accessory drive constructed in accordance with the present invention,

FIGURE 2 is a cross-sectional view of the drive illustrated in FIGURE 1,

FIGURE 3a is a front view of an alternate embodiment of the drive link shown in FIGURE 1,

FIGURE 3b is a side plan view of the alternate drive link of FIGURE 3a,

FIGURE 4 is a projected view of the embodiment of the invention shown in FIGURE 1,

FIGURES 5 and 6 illustrate an alternate braking mechanism and

FIGURE 7 illustrates an actuation arm shown in FIGURES 5 and 6.

### DETAILED DESCRIPTION OF THE DRAWINGS

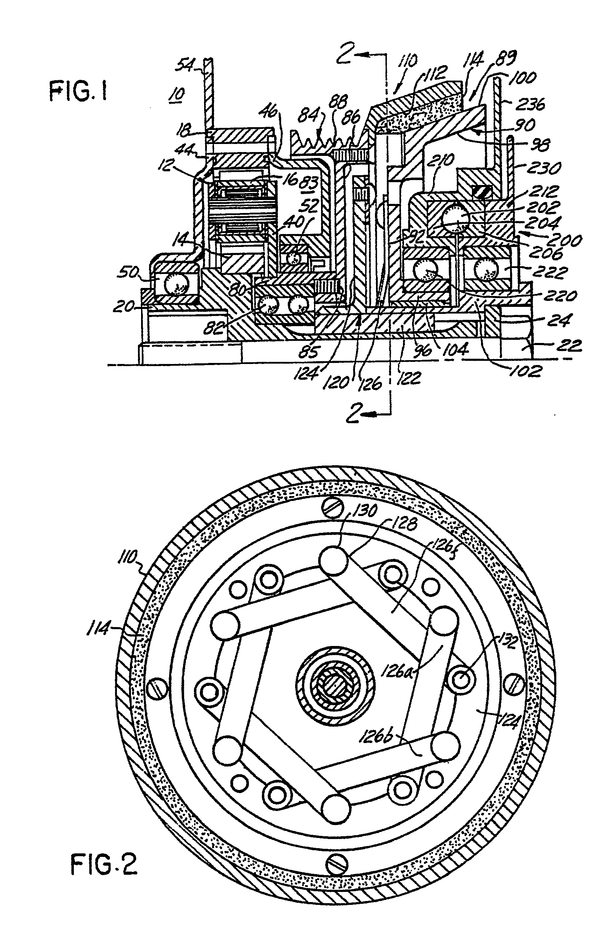

Reference is now made to the accompanying FIGURES which illustrate a multi-speed accessory drive 10 which incorporates an off-mode of operation. With reference to FIGURE 1, the drive 10 incorporates a speed reducing planetary gear set generally indicated as 12 comprising a sun gear 14, a plurality of planet gears 16 positioned in surrounding relation relative to the sun gear and a ring gear 18 positioned in driving relation about the plurality of planet gears. FIGURE 1 illustrates but one of the planet gears 16, such construction being known to one familiar with the art.

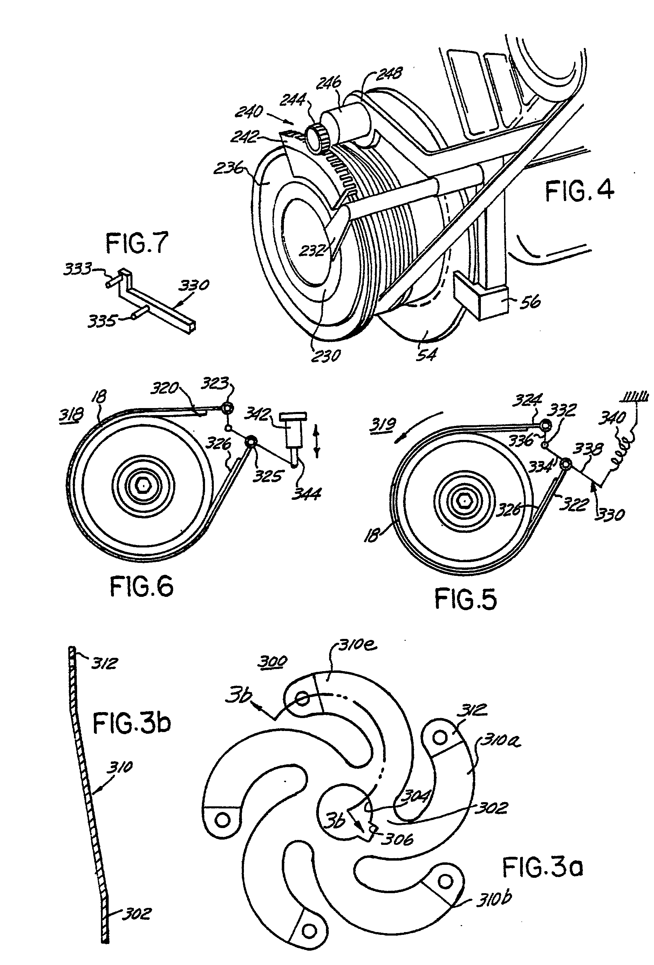

The sun gear 14 is mounted to and rotates with an input member or shaft 20 which as illustrated in FIGURE 1, supports a number of other components of the drive 10. The shaft 20 is connected to a rotating member of the engine, such as its crankshaft (not shown) by means of a bolt 22 and a washer 24. The planet gears 16 are connected to a planet carrier 40 which is connected to an axially extending hub 80 concentric to the input member 20. The ring gear 18 is positioned by housing members 44 and 46 which are isolated from the input member 20 and an axially extending hub 80 by bearings 50 and 52. The housing members 44 and 46 define a lubrication cavity 83 for oil or the like. In the embodiment of the invention shown in FIGURE 1 a disk 54 is attached to and rotatable with the ring gear 18. The rotation of the ring gear 18 and disk 54 is controlled by a braking device such as the brake caliper 56 shown in FIGURE 4. The caliper 56 may be pneumatically or hydraulically activated in a known manner in response to control signals. FIGURES 5 and 6 illustrate an al- ternate means 319 for stopping the rotation of the ring gear 18.

Returning to FIGURE 1 it can be seen that the planet carrier 40 extends radially upward from the planet gears and is attached to the hub 80 which is rotationally supported relative to the input member 20 by a double race bearing 82. The hub 80 supports an output pulley 84 which may be attached thereto by screws 85. The pulley 84 comprises a radially extending portion or member 86 which terminates at a pulley surface 88.

The drive 10 further includes a cone clutch 89 which includes a pressure plate 90. The pressure plate 90 includes a radially extending portion 92 and a conically shaped ring 98 coaxially positioned to the shaft 20. The ring 98 includes a tapered surface 100 which acts as a conical engagement surface as hereinafter described. The base 96 of the pressure plate 90 is supported and rotationally isolated from the shaft by a spacer 102 and a bushing 104. In this manner the pressure plate 90 is free to move axially on the bushing 104.

The cone clutch 89 further includes a cover 110 comprising a tapered inner surface 112 which supports a ring of a friction material 114, which acts a conical friction surface for engagement with the tapered surface 100. The cover 110 extends from and rotates with the pulley 84.

A drive link 120 is positioned between the pulley 84 and pressure plate 90. The drive link 120 is attached to and rotates with the shaft 20. A key 122 may be used to connect the drive link 120 to the shaft 20. The drive link 120 includes a radially extending portion 124 which supports a plurality of spring elements 126a–f, shown in greater detail in FIGURE 2. The spring elements 126a–b in the embodiment of the invention shown in FIGURES 1 and 2 comprise a plurality of leaf springs which are attached at one end generally shown as 128 by rivots 130 or the line to the radial portion 124 of the drive link 120 and attached at their other end 132 to the radially extending portion 92 of the pressure plate 90.

An alternate embodiment of the drive link 120 and spring elements is shown in FIGURE 3a and generally designated as 300. This alternate embodiment combines the structural features of the drive link 120 and the springs 126 into a unitary structure. More specifically the drive link 300 comprises a central hub 302 defining an opening 304 which is sized to receive the shaft 20. A side view of the drive link 300 is shown in FIGURE 3b. The hub 302 further includes a keyway 306 for receiving a key such as key 122 as previously described. Radially sweeping outward from the hub 302 are a plurality of flexible spring-like arms 310a–e which also extend axially outward from the hub 302 and terminate at ends 312. The ends 312 are substantially flat and are adapted to be attached to the radial portion 92 of the clutch plate 90 in the manner that the springs 126 were attached.

The pressure plate 90 is clutched or moved into contact with the friction material 114 by the operation of an actuator 200 shown in FIGURE 1. One such actuator is a ball ramp actuator which includes a plurality of balls 202 supported by a plurality of ball ramps 204 and 206 in a known manner. The ramps 204 and 206 are each supported by their respective ramp support members 210 and 212. These ramp support members are rotationally isolated from the input member 20 by means of the thrust bearings 220 and 222. More specifically bearing 220 supports the ramp support member 210 relative to the base 96 of the pressure plate 90 while bearing 222 supports the other ramp support member 212 relative to the spacer 102 secured relative to the input member 20 by a key 122.

To activate the ball ramps 204 and 206 their respective ramp supports 210 and 212 are rotated relative to one another. This is accomplished by securing the circular flange 230 of the support 212 to a bracket 232 which is attached to the engine block as shown in FIGURE 4. The circular flange 236 of the support 210 is moved by a rack and pinion mechanism, generally designated as 240. This mechanism 240 comprises a rack 242 secured to the flange 236, and a pinion gear 244 driven by a motor 246. The motor 246 is responsive to control signals generated by an electronic control unit (ECU) (not shown) and secured by a bracket 248 to the engine. In this manner the ramp support 210 can be rotated either clockwise or counter clockwise relative to the ramp support 212 thus causing the pressure plate 90 to move axially inward and outward relative to the friction material 114.

Reference is again made to FIGURE 1 which, illustrates the pressure plate 90 in an engaged or clutched mode of operation with tapered surface 100 of the pressure plate 90 engaging the friction material 114. If it is desired to totally disengage the accessory (not shown) driven by the pulley 84, the braking mechanism such as the caliper 56 is deactivated thus permitting the disk 54 to rotate freely and the rack and pinion mechanism 244 is rotated in a manner to cause the ramp support 210 to move to the right as viewed in FIGURE 1. The pressure plate 90 will move with the ramp support 210 thereby disengaging it from the friction material 114. In this operating mode the pulley 84 will free wheel about the input shaft. A low speed mode of operation is achieved by maintaining the clutch plate 90 disengaged from friction material 114 as described above and by activating the brake 56 to prevent the disk 54 from rotating. In this operating condition the output pulley 84 is driven through the speed-reducing planetary gear set 12 and more particularly, the output pulley 84 is driven through the sun gear 14, the planet gears 16, the planet carrier 40 and hub 80. In this declutched mode of operation, the ring gear 18 will have a tendency to rotate in a direction opposite the direction of rotation of the input shaft. The ring gear rotation is conveniently halted by application of the caliper 56. Having restrained the ring-gear 18 from undesired rotation, the output pulley 84 will thereafter rotate at a reduced ratio relative to the speed of the input member 20. When it is desired to increase the speed of the output pulley 84, that is, to drive the pulley 84 at shaft speed, the ramp support 210 is rotated by the rack and pinion mechanism 240 which creates a corresponding relative separating motion between the ramps 204 and 206 causing the ramp 204, the ramp support 212 and thrust bearing 220 to move axially inward toward the pulley 84. This movement of the thrust bearing 220 causes the clutch plate 90 to move into contact with the friction material 114 connected to the output pulley 84. In this operating condition, the output pulley 84 is driven at the speed of the shaft 22 through the key 122, drive link 120, springs 126, pressure plate 90 and friction material 114. In as much as it is undesirable to restrain the ring gear 18 as described for low speed operation the caliper 56 is deactivated.

Reference is now made to FIGURE 5 and 6 which illustrate an alternate means 319 of controlling the rotation of the ring gear 18. This alternate embodiment replaces the disk 54 and braking device 56 previously discussed. With reference to FIGURE 6 there is illustrated an end view of the drive 10. As mentioned, the disk 54, which is not needed for this alternate embodiment, has been eliminated. Positioned circumferentially about the ring gear 18 is a flexible band 320 having ends 322 and 324 terminating at a short tube or ferrule 323 and 325 respectively. The band 320 supports on an interior side thereof a length of friction material 326. The band 320 and friction material 326 partially circumscribe the ring gear 18. In the preferred embodiment of the invention the friction material 326 wraps about the ring gear 18 for approximately 240 degrees (wrap angle). The alternate braking device further includes a pivotably supported actuation arm generally designated at 330. The arm 330 comprises a lever supported at a fulcrum point generally designated as 332 and includes lever arms 334 and 336. Extending from the arms 334 and 336 are rods 333 and 335 respectively which are loosely received within one of the tubes or ferrules 323 and 325. The rods 333 and 335 are more clearly shown in FIGURE 7. It is preferable that lever arm 334 be greater than lever arm 336. In the illustrate embodiment of the invention the ratio of arms 334 to 336 is approximately 2.25. This ratio, as well as the wrap angle of 240 degrees minimizes band tension while permitting placement of these components in the small working space available. The arm 330 includes an extension 338 which is attached to a non-moving part of the engine. The means of attachment of the extension 338 to the engine can be by utilizing a spring 340 or a movable solenoid 342 as illustrated in FIGURE 6.

Assuming that extension 338 is attached to the spring 340, the spring 340 will lightly bias the band 320 into engagement with the ring gear 18 as shown in FIGURE 5. The rotation of the ring gear 18 in the direction as shown by the arrow causes the band 320 to self-tighten thus providing a braking force to stop the rotation of the ring gear 18. To achieve the low speed mode of operation the actuator 200 is disengaged, that is, the pressure plate 90 is moved out of engagement with the friction material 114. As previously mentioned, in this condition the ring gear 18 will tend to rotate opposite to the shaft 20 in the direction shown in FIGURE 5. Due to the self-tightening or self-actuating feature of the alternate braking mechanism 319 this undesired reverse rotation of the ring gear 18 is automatically stopped.

During high speed operation the actuator 200 is engaged and as described above, the ring gear 18 will tend to rotate with the shaft 20 in a substantially clockwise direction as viewed in FIGURE 5. However, due to the unequal lengths of the lever arms 334 and 336 such rotation of the ring gear 18 will tend to loosen the band 320 situated about the ring gear 18 thus permitting the ring gear to rotate relatively free of the drag forces created by the friction material 326.

A further embodiment of the invention is shown in FIGURE 6. The replacement of the spring 340 with a solenoid device 342 having a movable armature 344 permits the end 325 of the band 320 to move inwardly toward the ring gear 18, upon extention of the armature 344 thus moving the band 320 away from the ring gear for total disengagement. The operation of the solenoid device 242 is controlled in concert with the operation of the actuator 200, that is, during the low speed mode of operation, with the actuator 200 disengaged the armature 344 is moved to tighten the band 320 about the ring gear 18 thereby preventing its rotation. During high speed operation with the actuator 200 is disengaged and the armature is moved to cause the band 320 to move out of engagement with the ring gear 18 permitting it to rotate in the direction of the shaft 20. A cover (not shown) may be utilized to enclose the band 320 and ring gear 18 to protect these structural components from contamination. Retraction of the armature 344 causes the band 320 to move into engagement with the ring gear thus stopping its rotation during low speed operation.

**Claims**

1. A multi-speed accessory drive (10) having a plurality of operating conditions in which an output member (84) is rotated at the speed of an input or driving member (20), at a reduced speed ratio or at zero speed relative thereto the drive (10) comprising
a planetary gear set (12) comprising a sun gear (14), a plurality of planet gears (16) meshing with said sun gear and a ring gear (18), said sun gear being drivingly connected to the input member and said planet gears being drivingly connected to the output member (84) and means (54, 56; 318) for selectively freeing or restraining said ring gear (18) to permit said output member respectively to be free or to be driven by the input member
a pressure plate (90) axially movable relative to the input member
means (204, 206, 212, 210, 240) for selectively moving said pressure plate into or out of rotational engagement with a clutching surface connected to said output member (84) for alternatively drivingly connecting or disconnecting said output member with said input member;
and characterized by an axially resilient spring link rotatably keyed to and acting between said input member and said pressure plate (90) for rotating said pressure plate and for axially urging said pressure plate away from said driving link.

2. A multi-speed accessory drive as claimed in claim 1 characterized in that said pressure plate and said clutching surface are frusto-conical.

3. A multi-speed accessory drive as claimed in claim 1 or 2 characterized in that said means for selectively freeing or restraining said ring gear comprises an actuator-operated caliper (56) cooperable with a disc (54) coaxial with the ring gear (18).

4. A multi-speed accessory drive as claimed in claim 1 or 2 characterized in that said means for selectively freeing or restraining said ring gear (18) comprises an actuator operated band-brake cooperable with a cylindrical surface coaxial with the ring gear.

5. The drive (10) as claimed in claim 4 characterized in that said band brake comprises a band (320) terminating at a first end (322) and at a second end (324), a pivoted actuation arm (330) including lever arms (334, 336) of differing length extending from a pivot point or fulcrum (332), the ends of said lever arms opposite said fulcrum being loosely received at said first end and at said second end of said band (320) and in that biasing means (340) are connected to the longer of said lever arms (334) for urging said band (320) into engagement with said ring gear.

6. The drive (10) as defined in Claim 5 characterized in that said biasing means includes a solenoid actuator (342) movable to a first condition causing said band (320) to be released from said ring gear (18) and to a second condition moving said band (320) into engagement with said ring gear (18).

7. The drive as defined in any preceding claim characterized in that said spring link comprises a central hub (302) drivingly connected to said input member (20), a plurality of arcuately shaped arms (310) extending radially and axially outward from said central hub, wherein the end of each of said arms, opposite from said hub (302) is adapted to connect with and rotationally drive said pressure plate (90).

## Patentansprüche

1. Mehrgängiger Zusatzantrieb (10) mit mehreren Betriebszuständen, bei dem ein Abtriebskörper (84) mit der Drehzahl eines Antriebskörpers (20), mit einer untersetzten Drehzahl oder mit der Drehzahl 0 angetrieben wird und der Antrieb (10) aufweist:
ein Planetengetriebe (12) mit einem Innenrad, mehreren Planetenrädern (16) im Eingriff mit dem Innenrad und einem Außenrad (18), wobei das Innenrad mit dem Antriebskörper antriebsmäßig verbunden ist und die Planetenräder mit dem Abtriebskörper (84) antriebsmäßig verbindbar sind,
einer Einrichtung (54, 56; 318) zum wahlweisen Lösen oder Festlegen des Außenrades (18), damit der Abtriebskörper frei läuft oder vom Antriebskörper angetrieben wird,
eine axial gegenüber dem Antriebskörper verschiebbare Druckplatte (90),
eine Einrichtung (204, 206, 210, 212, 240) zum wahlweisen Verschieben der Druckplatte in bzw. außer Eingriff mit einer mit dem Abtriebsglied (84) verbundenen Kupplungsfläche, damit der Abtriebskörper und der Antriebskörper in bzw. außer Antriebsverbindung gebracht werden,
gekennzeichnet durch eine in axialer Richtung elastische Federverbindung, die zwischen dem Antriebskörper und der Druckplatte (90) und an diesen Teilen befestigt ist, um die Druckplatte drehbar anzutreiben und in axialer Richtung von der Antriebsverbindung weg zu beaufschlagen.

2. Mehrgängiger Zusatzantrieb nach Anspruch 1, dadurch gekennzeichnet, daß die Druckplatte und die Kupplungsfläche kegelig ausgebildet sind.

3. Mehrgängiger Zusatzantrieb nach Anspruch 1 oder 2, dadurch gekennzeichnet, daß die Einrichtung zum wahlweisen Lösen bzw. Festlegen des Außenrades ein von einer Betätigungseinrichtung betätigter Bremssattel (56) ist, der mit einer zum Außenrad (18) koaxialen Scheibe (54) zusammenwirkt.

4. Mehrgängiger Zusatzantrieb nach Anspruch 1 oder 2, dadurch gekennzeichnet, daß die Einrichtung zum wahlweisen Lösen bzw. Festlegen des Außenrades (18) eine von einer Betätigungseinrichtung betätigte Bandbremse ist, die mit einer zum Außenrad koaxialen zylindrischen Fläche zusammenwirkt.

5. Antrieb (10) nach Anspruch 4, dadurch gekennzeichnet, daß die Bandbremse ein Band (320) mit einem ersten Ende (322) und einem zweiten Ende (324) aufweist, daß ein schwenkbarer Betätigungsarm (330) Hebelarme (334, 336) unterschiedlicher Länge beiderseits eines Schwenklagers (332) aufweist, daß die dem Schwenklager abgekehrten Enden der Hebelarme lose am ersten Ende und am zweiten Ende des Bandes (320) aufgenommen sind und daß mit dem längeren Hebelarm (334) eine Spanneinrichtung (340) verbunden ist, um das Band (320) in Eingriff mit dem Außenrad zu bringen.

6. Antrieb (10) nach Anspruch 5, dadurch gekennzeichnet, daß die Spanneinrichtung eine magnetische Betätigungseinrichtung (342) aufweist, die in einen ersten Zustand bewegbar ist, indem das Band (320) von dem Außenrad (18) gelöst wird und die in einen zweiten Zustand bewegbar ist, indem das Band in Eingriff mit dem Außenrad (18) gebracht wird.

7. Antrieb nach einem der vorhergehenden Ansprüche, dadurch gekennzeichnet, daß die Federverbindung eine zentrale antriebsmäßig mit dem Antriebskörper (20) verbundene Nabe (302) aufweist, sowie mehrere bogenförmige Arme (310), die sich radial und axial nach außen von der zentralen Nabe erstrecken, wobei jedes von der Nabe (302) abgekehrte Ende der Arme zum Drehantrieb der Druckplatte (90) mit dieser verbunden ist.

## Revendications

1. Une transmission pour accessoire à plusieurs vitesses (10), à plusieurs conditions de fonctionnement dans laquelle un organe de sortie (84) est entraîné en rotation à la vitesse d'un organe d'entrée ou d'entraînement (20), avec un rapport de vitesse réduit, ou avec une vitesse nulle par rapport à l'organe de sortie; la transmission (10) comprenant:

un train d'engrenages planétaire (12) comprenant un planétaire (14), un ensemble de satellites (16) engrenant avec le planétaire, et une couronne (18), le planétaire étant accouplé à l'organe d'entrée de façon à être entraîné par celui-ci, et les satellites pouvant être accouplés à l'organe de sortie (84) de façon à l'entraîner et des moyens (54, 56; 318) pour sélectivement libérer ou retenir ladite couronne (18) pour permettre audit organe de sortie (84) respectivement d'être libre ou d'être entraîné par ledit organe d'entrée

un plateau de pression (90) mobile en direction axiale par rapport à l'organe d'entrée;

des moyens (204, 206, 212, 210, 240) pour déplacer sélectivement le plateau de pression pour l'amener en contact, avec entraînement en rotation, ou hors contact avec une surface d'embrayage qui est reliée à l'organe de sortie (84) pour alternativement accoupler l'organe de sortie à l'organe d'entrée, avec transmission du mouvement ou pour séparer entre eux ces deux organes;

et caractérisée par une liaison à ressort présentant une élasticité en direction axiale qui est accouplée en rotation à l'organe d'entrée et au plateau de pression (90), et agit entre ces derniers, pour entraîner en rotation le plateau de pression et pour solliciter le plateau de pression en direction axiale, du côté opposé à la liaison d'entraînement précitée.

2. Une transmission pour accessoire à plusieurs vitesses selon la revendication 1, caractérisée en ce que le plateau de pression et la surface d'embrayage sont tronconiques.

3. Une transmission pour accessoire à plusieurs vitesses selon la revendication 1 ou 2, caractérisée en ce que les moyens destinés à libérer ou à bloquer sélectivement la couronne comprennent un étrier (56), manœuvré par un actionneur, qui coopère avec un disque (54) coaxial à la couronne (18).

4. Une transmission pour accessoire à plusieurs vitesses selon la revendication 1 ou 2, caractérisée en ce que les moyens destinés à libérer ou à bloquer sélectivement la couronne (18) comprennent un frein à bande manœuvré par un actionneur qui coopère avec une surface cylindrique coaxiale à la couronne.

5. La transmission (10) selon la revendication 4, caractérisée en ce que le frein à bande comprend une bande (320) qui se termine à une première extrémité (322) et à une seconde extrémité (324), un bras de manœuvre pivotant (330) comprenant des bras de levier (334, 336) de longueurs différentes qui s'étendent à partir d'un point de pivotement ou point d'appui (332), les extrémités de ces bras de levier qui sont opposées au point de pivotement étant logées de façon lâche dans la première extrémité et la seconde extrémité de la bande (320), et en ce que des moyens d'application de force (304) sont accouplés au plus long des bras de levier (304) pour solliciter la bande (320) de façon qu'elle vienne en contact avec la couronne.

6. La transmission (10) selon la revendication 5, caractérisée en ce que les moyens d'application de force comprennent un actionneur à électro-aimant (342) qui peut être amené dans une première condition dans laquelle la bande (320) est dégagée de la couronne (18), et dans une seconde condition dans laquelle la bande (320) est amenée en contact avec la couronne (18).

7. La transmission selon l'une quelconque des revendications précédentes, caractérisée en ce que la liaison à ressort comprend un moyeu central (302) qui est accouplé à l'organe d'entrée (20) et est entraîné par ce dernier, et un ensemble de branches courbes (310) qui s'étendent radialement et axialement vers l'extérieur à partir du moyeu central, dans une configuration dans laquelle l'extrémité de chacune des branches qui est opposée au moyeu (302) est conçue pour être accouplée au plateau de pression (90) et pour l'entraîner en rotation.

EP 0 212 276 B1

FIG. 1

FIG. 2

FIG.4

FIG.7

FIG.6

FIG.5

FIG.3b

FIG.3a